# EUROPÄISCHE PATENTSCHRIFT

(11) **EP 0 865 723 B1**
(45) Veröffentlichungstag und Bekanntmachung des Hinweises auf die Patenterteilung: **21.08.2002**
(21) Anmeldenummer: 98890073.4
(22) Anmeldetag: 16.03.1998
(51) Int. Cl.: A01F 15/07

(54) **Ballenbilder für landwirtschaftliches Halmgut**
Bale maker for agricultural crop
Machine à balles pour récolte agricole

(30) Priorität: 17.03.1997 AT 46497
(43) Veröffentlichungstag der Anmeldung: 23.09.1998
(73) Patentinhaber: Göweil, Herbert, 4202 Kirchschlag (AT)
(72) Erfinder: Göweil, Herbert, 4202 Kirchschlag (AT)
(74) Vertreter: Hübscher, Helmut, Dipl.-Ing.

(56) Entgegenhaltungen:
- EP-A- 0 110 110
- WO-A-90/14756
- WO-A-96/12399

## Beschreibung

Die Erfindung bezieht sich auf einen Ballenbildner für landwirtschaftliches Halmgut mit einem ein- bzw. doppelachsigen Anhängerfahrgestell, das eine Ladeeinrichtung und eine anschließende Rolleinrichtung zum Aufnehmen und Zusammenballen des Halmgutes trägt, wobei am Anhängerfahrgestell hinter der Rolleinrichtung eine Folienwickeleinrichtung und zwischen Rolleinrichtung und Folienwickeleinrichtung eine Ballenübergabeeinrichtung angeordnet sind, die als in Längsführungen des Fahrgestells bis in den Ballenausgabebereich der Rolleinrichtung verfahrbar geführter Schlitten ausgeführt ist und die Folienwickeleinrichtung aus einer Wälzvorrichtung zum Umwälzen der Ballen und einer Wickelvorrichtung zum Aufbringen der Hüllfolien besteht.

Mit solchen Ballenbildnern wird das gemähte Halmgut, beispielsweise Gras oder andere Futterpflanzen, zu einzelnen Ballen geformt, die dann zum Silieren luftdicht mit Hüllfolien umwickelt werden. Dazu ist es bekannt, die erforderlichen Lade- und Rolleinrichtungen, beispielsweise Zinkenförderer und Rolltrommeln, auf einem Fahrgestell aufzubauen und mittels Ackerschlepper am Feld über die vorbereiteten Halmgutschwaden zu fahren. Zum Umwickeln der Ballen gibt es außerdem entsprechende Wickelmaschinen, die während des Umwälzens eines Ballens um eine annähernd horizontale Achse die Hüllfolie mit einem relativ zum Ballen um eine Vertikalachse umlaufenden Folienabzug auf den Ballen aufwickeln. Grundsätzlich bestehen die Folienwickeleinrichtungen aus einer Wälzvorrichtung zum Umwälzen der Ballen und einer Wickelvorrichtung zum Aufbringen der Hüllfolien, so daß durch das gleichzeitige Umwälzen der Ballen und Aufwickeln der Hüllfolien eine geschlossene Folienumhüllung der Ballen entsteht. Auch diese Wickelmaschinen können auf einem Fahrgestell aufgesetzt und mittels eines Ackerschleppers zum Einsatzort verfahren werden, was allerdings für die Ballenherstellung einerseits und das Ballenumwickeln anderseits jeweils eigene Maschinen und damit auch zwei voneinander getrennte Arbeitsgänge erfordert. Darüber hinaus wurde auch schon vorgeschlagen, einen Ballenbildner mit einer Wickelmaschine zu kombinieren, um in einem gemeinsamen Arbeitsablauf Ballen formen und folienumwickeln zu können. Zur Kombination dieser beiden Maschinen werden allerdings die Einzelmaschinen lediglich hintereinandergekuppelt oder die beiden Fahrgestelle starr miteinander verbunden. Eine derartige Vorrichtung ist beispielsweise aus der EP 0 110 110 A bekannt. Dabei sind die Wälzvorrichtung zum Umwälzen der Ballen, die Wickelvorrichtung zum Aufbringen der Hüllfolien und die Ballenübergabeeinrichtung auf einem gemeinsamen Gestell montiert. Die Ballenübergabeeinrichtung besteht aus mehreren, der Wälzvorrichtung vorgeordneten Rollen und das Gestell ist in Längsführungen des Fahrgestells verschiebbar gelagert. Zur Übergabe eines gepreßten Ballens von der Rolleinrichtung an die Folienwickeleinrichtung, muß das Gestell samt Übergabeeinrichtung von der Rolleinrichtung wegbewegt werden, um die Heckklappe der Rolleinrichtung öffnen zu können, wonach der Ballen über die Rollen der Wälzeinrichtung zugeführt wird. Anschließend wird die Heckklappe geschlossen und das Gestell wieder in Richtung Rolleinrichtung verfahren. Es ergibt sich somit ein verhältnismäßig langes und nur schwierig manövrierbares Fahrzeug, das vor allem die gewünschte Wendigkeit während des eigentlichen Arbeitseinsatzes am Feld missen läßt und für eine Straßenfahrt eine ausgesuchte kurvenarme und genügend breite Strecke erfordert.

Des weiteren ist es bekannt (DE 41 20 733 A), die Wälzeinrichtung, die Folienwickeleinrichtung und die dazwischen angeordnete Übergabeeinrichtung auf einem ein- bzw. doppelachsigen Fahrgestell anzuordnen, wobei die Übergabeeinrichtung aus einem im Fahrzeugrahmen längsgeführten Gestell besteht, das einen gerollten Ballen bei Bedarf auf die Wälzeinrichtung hebt. Durch das Vorsehen der gesonderten Übergabeeinrichtung erhöht sich allerdings die Baulänge des Ballenbildners und der Geräteaufwand.

Der Erfindung liegt daher die Aufgabe zugrunde, diese Mängel zu beseitigen und einen Ballenbildner der eingangs geschilderten Art zu schaffen, der sich bei verhältnismäßig aufwandsarmer Bauweise gleichzeitig zum Ballenformen und Ballenumwickeln eignet und sich durch seine überraschend gute Manövrierbarkeit auszeichnet.

Die Erfindung löst diese Aufgabe dadurch, daß die Wälzvorrichtung der Folienwickeleinrichtung auf dem Schlitten aufgebaut ist. Das einachsige Fahrgestell, ergibt einen einfachen und gut manövrierbaren Anhänger mit ausreichend großer Trag- und Aufnahmefähigkeit für die einzusetzenden Einrichtungen, wobei die Rolleinrichtung und die Folienwickeleinrichtung verhältnismäßig eng zusammengerückt werden können, was zu einem kompakten Aufbau und einer einfachen Ballenübergabe von der Rolleinrichtung zur Folienwickeleinrichtung führt. Durch die ein- bzw. doppelachsige und verhältnismäßig kurze Ausgestaltung des Anhängers kommt es weder bei der Straßenfahrt noch beim Arbeitseinsatz im Gelände zu größeren Lenk- oder Manövrierschwierigkeiten und der Anhänger läßt sich durchaus auch auf engem Raum wenden. Dabei bleiben Art und Funktion der jeweiligen Lade- und Rolleinrichtungen bzw. Folienwickel- und Ballenübergabeeinrichtungen im wesentlichen frei wählbar, so lange die Folienwickeleinrichtung zum Umwickeln der in der Rolleinrichtung geformten Ballen mit Hüllfolien geeignet ist.

Erfindungsgemäß wird der in der Rolleinrichtung entstehende Ballen direkt auf die mit dem Schlitten vorgefahrene Wälzvorrichtung abgegeben, die zum Folienumwickeln lediglich in ihre Ausgangsposition in der Folienwickeleinrichtung zurückfährt, wonach der Ballen umwickelt werden kann. Es ist keine eigene Übergabeeinrichtung erforderlich, wodurch sich Platz einsparen läßt und der Geräteaufwand verringert wird.

Zweckmäßig ist es weiters, wenn die Längsführungen heckseitig über die Folienwickeleinrichtung hinaus sich erstrecken und in abwärts geneigte Endabschnitte zum Abkippen des Schlittens auslaufen, so daß nach dem Umhüllen der Ballen mit der Folie der Schlitten mit der Wälzvorrichtung heckseitig ausgefahren und dabei der Ballen abgekippt wird, was eigene Abgabevorrichtungen für die Folienwickeleinrichtungen unnötig macht.

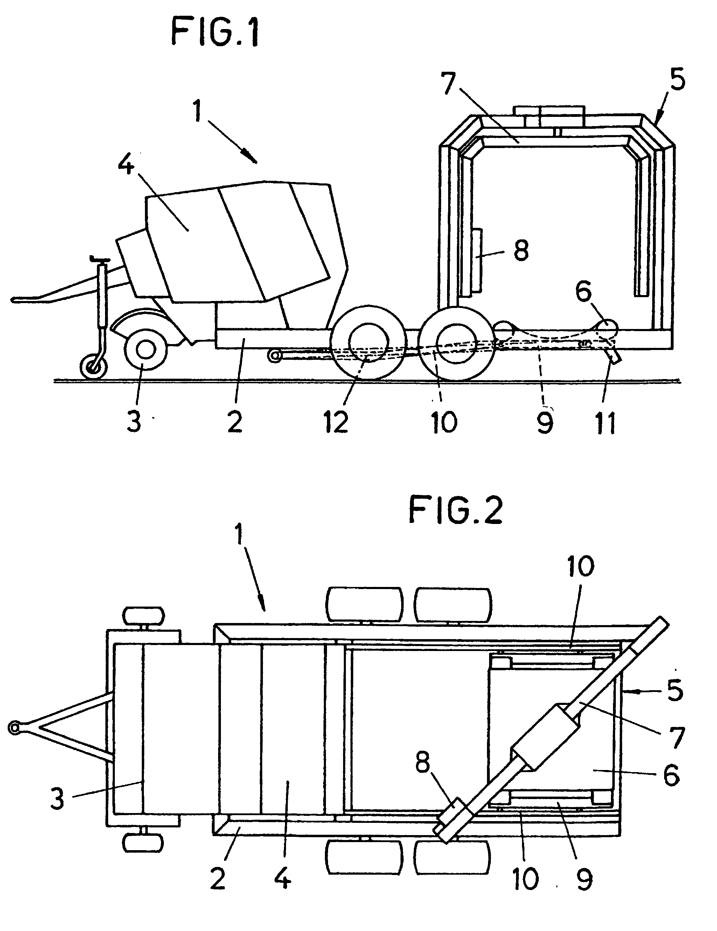

In der Zeichnung ist der Erfindungsgegenstand rein schematisch veranschaulicht, und zwar zeigen
- Fig. 1 und 2: einen erfindungsgemäßen Ballenbildner ist Seitenansicht und Draufsicht sowie
- Fig. 3: die Arbeitsweise dieses Ballenbildners an Hand verschiedener Arbeitsstellungen der Bildnereinrichtungen.

Ein Ballenbildner 1 zum Herstellen von Halmgutballen und Umwickeln dieser Ballen mit Hüllfolien besteht aus einem doppelachsigen Anhängerfahrgstell 2, auf dem frontseitig eine Ladeeinrichtung 3 mit einer anschließenden Rolleinrichtung 4 zum Aufnehmen und Zusammenballen des Halmgutes und heckseitig eine Folienwickeleinrichtung 5 zum Umwickeln der Ballen mit Hüllfolien aufgebaut sind. Die Folienwickeleinrichtung 5 umfaßt eine Wälzvorrichtung 6 zum Umwälzen der Ballen um eine annähernd horizontale Wälzachse sowie eine Wickelvorrichtung 7 zum Aufbringen der Hüllfolien mit einem um eine Vertikalachse relativ zur Wälzvorrichtung 6 umlaufenden Folienabzug 8. Die Wälzvorrichtung 6, beispielsweise ein endlos umlaufendes Förderband, ist auf einem Schlitten 9 aufgesetzt, der entlang von Längsführungen 10 des Fahrgestells 2 bis in den Bereich der Rollenrichtung 4 verfahrbar ist, so daß die Wälzvorrichtung 6 auch als Übergabeeinrichtung zwischen Rolleinrichtung 4 und Folienwikkeleinrichtung 5 dient. Die Längsführungen 10 laufen heckseitig in abwärtsgeneigte Endabschnitte 11 aus, wodurch ein heckseitiges Verfahren des Schlittens 9 aus der Folienwickeleinrichtung 5 heraus zu einem Kippen des Schlittens 2 führt und damit auch ein auf der Wälzvorrichtung 6 liegender Ballen abgeworfen werden kann. Zur Schlittenbetätigung ist ein geeigneter Antrieb, beispielsweise ein nur angedeuteter Kettenantrieb 12 vorgesehen.

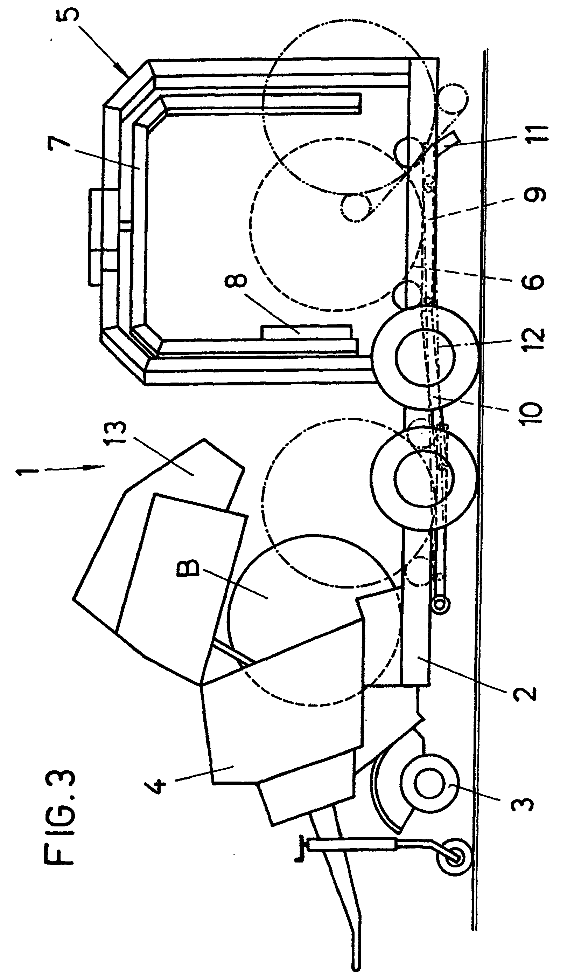

Wie in Fig. 3 angedeutet, läßt sich beim Verfahren des Ballenbildners 1 entlang einer Halmgutschwade in einem Arbeitsgang das Halmgut über die Ladeeinrichtung 3 aufnehmen und in die Rolleinrichtung 4 fördern, wo das Halmgut zu einem Ballen B zusammengerollt wird. Nach der Ballenherstellung wird die Ausgabeklappe 13 der Rolleinrichtung 4 geöffnet und der fertige Ballen B der mit dem Schlitten 9 in ihre Übernahmestellung vorgefahrenen Wälzvorrichtung 9 übergeben. Anschließend fährt der Schlitten 9 die Wälzvorrichtung 6 zusammen mit dem geladenen Ballen in die Folienwickeleinrichtung 5 zurück, wo nun durch gleichzeitiges Umwälzen des Ballens B durch die Wälzvorrichtung 6 und Umwickeln der Hüllfolie mittels des umlaufenden Folienabzuges 8 der Ballen B rundum mit Hüllfolie eingewickelt wird. Sobald der Wickelvorgang beendet ist, wird die Folie abgetrennt und der eingehüllte Ballen durch heckseitiges Ausschieben des Schlittens 9 bodenwärts abgekippt.

Der erfindungsgemäße Ballenbildner zeichnet sich durch seine kompakte Bauweise und vor allem durch seine hervorragenden Manövrierfähigkeiten aus und bietet die Möglichkeit, rationell Halmgut zu Ballen zu formen und sofort mit Hüllfolie zu umwickeln.

## Patentansprüche

1. Ballenbildner (1) für landwirtschaftliches Halmgut mit einem ein- bzw. doppelachsigen Anhängerfahrgestell (2), das eine Ladeeinrichtung (3) und eine anschließende Rolleinrichtung (4) zum Aufnehmen und Zusammenballen des Halmgutes trägt, wobei am Anhängerfahrgestell (2) hinter der Rolleinrichtung (4) eine Folienwickeleinrichtung (5) und zwischen Rolleinrichtung (4) und Folienwikkeleinrichtung (5) eine Ballenübergabeeinrichtung angeordnet sind, die als in Längsführungen (10) des Fahrgestells (2) bis in den Ballenausgabebereich der Rolleinrichtung (4) verfahrbar geführter Schlitten (9) ausgeführt ist und die Folienwickeleinrichtung aus einer Wälzvorrichtung (6) zum Umwälzen der Ballen und der Folienwickelvorrichtung (5) zum Aufbringen der Hüllfolien besteht, **dadurch gekennzeichnet, daß** die Wälzvorrichtung (6) der Folienwickeleinrichtung (5) auf dem Schlitten (9) aufgebaut ist.

2. Ballenbildner nach Anspruch 1, **dadurch gekennzeichnet, daß** die Längsführungen (10) heckseitig über die Folienwickeleinrichtung (5) hinaus sich erstrecken und in abwärts geneigte Endabschnitte (11) zum Abkippen des Schlittens (9) auslaufen.

## Claims

1. A baler (1) for agricultural stalk material, with a single or double-axle trailer chassis (2), which carries a loading device (3) and an adjoining roller device (4) to receive and bale the material, a sheet wrapping device (5) being disposed on the trailer chassis (2) behind the roller device (4) and a bale transfer device constructed as a carriage (9) movable in longitudinal guides (10) of the chassis (2) into the bale delivery zone of the roller device (4) being disposed between the latter and the sheet wrapping device (5), the latter consisting of a rolling device (6) for rolling the bales and the sheet wrapping device (5) for delivering the wrapping sheets, **characterised in that** the rolling device (6) of the sheet wrapping device (5) is built on the carriage (9).

2. A baler according to claim 1, **characterised in that** the longitudinal guides (10) extend rearwardly beyond the sheet wrapping device (5) and terminate in downwardly inclined end portions (11) for tipping off the carriage (9).

## Revendications

1. Machine à former des balles (1) pour récolte agricole, avec un bâti de roulage en remorque (2), à un ou deux essieux, portant un dispositif de chargement (3) et un dispositif de roulage (4) annexé, pour recevoir et assembler en balles le produit récolté, sur le bâti de roulage en remorque (2) étant disposé, derrière le dispositif de roulage (4), un dispositif d'enveloppement avec une feuille (5) et, entre le dispositif d'enroulement (4) et le dispositif d'enveloppement avec une feuille (5), un dispositif de transfert de balles réalisé sous la forme de chariot (9) déplaçable dans des guidages longitudinaux (10) du bâti de roulage en remorque (2) jusque dans la zone de fourniture de balles du dispositif de roulage (5), et le dispositif d'enveloppement avec une feuille étant formé d'un dispositif de mise en rotation (6) pour faire tourner la balle et du dispositif d'enveloppement avec feuille (5) pour appliquer les feuilles de gainage, **caractérisée en ce que** le dispositif de rotation (6) du dispositif d'enveloppement avec une feuille (5) est monté sur le chariot (9).

2. Machine à former des balles selon la revendication 1, **caractérisée en ce que** les guidages longitudinaux (10) s'étendent côté arrière sur le dispositif d'enveloppement avec une feuille (5) et évoluent en tronçons d'extrémité (11) inclinés vers le bas, pour abaisser par basculement le chariot (9).
